(19) Europäisches Patentamt
European Patent Office
Office européen des brevets

(11) Publication number: **0 317 040 B1**

(12) **EUROPEAN PATENT SPECIFICATION**

(45) Date of publication of patent specification: **02.03.94**

(51) Int. Cl.[5]: **C08G 18/65**, C08J 9/30, D06N 3/14, C08G 18/66

(21) Application number: **88202975.4**

(22) Date of filing: **17.11.87**

(60) Publication number of the earlier application in accordance with Art.76 EPC: **0 269 346**

The file contains technical information submitted after the application was filed and not included in this specification

(54) **Polyurethane froth foams.**

(30) Priority: **19.11.86 GB 8627658**
**06.08.87 GB 8718636**

(43) Date of publication of application:
**24.05.89 Bulletin 89/21**

(45) Publication of the grant of the patent:
**02.03.94 Bulletin 94/09**

(84) Designated Contracting States:
**AT BE DE ES FR GB IT LU NL SE**

(56) References cited:
**EP-A- 0 048 986**
**EP-A- 0 269 346**
**GB-A- 1 460 863**
**US-A- 3 732 176**
**US-A- 3 795 636**

(73) Proprietor: **POLYOL INTERNATIONAL B.V.**
**Aert van Nesstraat 45,**
**Postbus 1310**
**NL-3012 CA Rotterdam(NL)**

(72) Inventor: **Berthevas, Paul Rene BP Chemicals (Suisse) SA**
**11-13 Rue de Veyrot**
**Box 149**
**CH-1217 Meyrin 2(CH)**
Inventor: **Fanget,Alain Francois BP Chemicals (Suisse) SA**
**11-13 Rue de Veyrot**
**Box 149**
**CH-1217 Meyrin 2(CH)**

(74) Representative: **Smart, Peter John et al**
**W.H. BECK, GREENER & CO**
**7 Stone Buildings**
**Lincoln's Inn**
**London WC2A 3SZ (GB)**

EP 0 317 040 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to novel polyurethane froth foams for use as a backing for coverings such as carpets or upholstery. In particular, the invention relates to novel polyurethane froth foams which can be formed or moulded into shape when hot and which retain their shape when cold.

The production of polyurethane froth foams, for use as a backing for coverings such as carpets, artificial grass, sports surfaces and the like, is a known process. Such polyurethane froth foams can be prepared, for example, by mixing a two-component reactive polyurethane-forming mixture with an inert gas (i.e. nitrogen, air etc), under froth-generating conditions of high shear, usually in the presence of catalysts and froth stabilisers. The polyurethane-forming mixture is chosen so that it reacts slowly thereby allowing ample time for a froth to be formed in the mixer.

Once the polyurethane froth has been formed it is usually contacted, in an uncured state, with an appropriate covering substrate, e.g. vinyl sheet, textile tufts, etc. to produce the finished foam backed covering. The finished foam backed covering is then cured at elevated temperature. A typical example of this process has been described in detail in Cellular Polymers Vol. 4, pages 179-183 (1985).

Similarly, GB-A-1460863 discloses polyurethane froth foam compositions comprising a polyether polyol, a polyisocyanate and as a chain extender an aromatic diamine or a glycol such as diethylene glycol. The foam compositions may be applied to a substrate such as a carpet prior to airing.

Foamed backed coverings produced by the processes described above are flexible but exhibit no shape retention. For some applications however, for example in the automotive industry, there is a demand for coverings which show shape retention at ambient temperatures but which are thermoformable, i.e. mouldable or formable at elevated temperatures. Such materials have the advantage that they can be bought or manufactured in sheet form and subsequently thermoformed into the complex shapes required to cover the interiors of automobiles.

One approach to rendering such coverings thermoformable is to incorporate into the covering a thermoplastic rigid polymer such as a polypropylene, a polyester, a polyamide or a polycarbonate. This can be done for example by bonding a sheet or a non-woven fleece of the thermoplastic rigid polymer to the covering or by incorporating a thermoplastic rigid polymer in powder form into the polyurethane froth foam.

A new method of rendering polyurethane froth foamed backed coverings thermoformable has now been discovered which avoids the need to use a thermoplastic material. The new method involves modifying the structure of the polyurethane by incorporating into the polyurethane froth foam forming mixture one or more chain extenders which render the cured polyurethane froth foam thermoformable whilst at the same time keeping it sufficiently stiff at ambient temperatures to give good shape retention.

Accordingly, the present invention provides a process for the manufacture of a thermoformable polyurethane froth foam which process comprises contacting a polyurethane forming formulation with an inert gas under conditions which produce a froth of the polyurethane forming formulation characterised in that the polyurethane forming formulation comprises a polyfunctional isocyanate, a polyfunctional alcohol, and a chain extender which is an alkoxylated bisphenol A.

The function of the chain extender is to render the final cured polyurethane froth foam thermoformable.

In EP-A-0 269 346, from which this is a divisional application, we describe processes similar to those described herein in which the chain extender is an aromatic amine having the formula I

FORMULA I

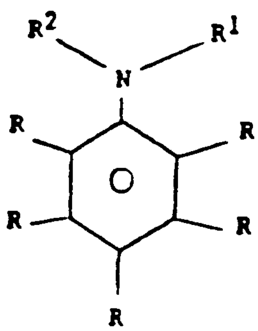

wherein the R groups are independently selected from hydrogen groups and the $R^1$ and $R^2$ groups are independently selected from hydrogen, hydroxy functionalised alkyl groups or hydroxy functionalised poly-(oxyalkylene) groups; with the proviso that $R^1$ and $R^2$ are not both hydrogen.

The alkoxylated bisphenol A is preferably one alkoxylated with between 1 and 6 moles of either ethylene oxide, propylene oxide or mixtures thereof per mole of bisphenol A.

Polyurethane froth foam formulations containing the chain extender of the present invention produce cured froth foams with a satisfactory degree of shape retention at or near room temperature and which are thermoformable at temperatures below 200 °C. Such cured froth foams when heated can be easily thermoformed by the action of mechanical or vacuum pressing.

Whilst the cured froth foams described above have the advantage that they are easily thermoformed and have adequate shape retention characteristics, it has also been found that the shape retention characteristics can be further improved by having a second chain extender present in the froth foam formulation.

Accordingly, in a preferrred aspect of the present invention there is provided a process for the manufacture of a polyurethane froth foam which process comprises contacting a polyurethane forming formulation with an inert gas under conditions which produce a froth of the polyurethane formulation characterised in that the polyurethane forming formulation comprises a polyfunctional isocyanate, a polyfunctional alcohol, a chain extender as described above and a second chain extender comprising a linear glycol.

The effect of the second chain extender is to improve the rigidity and hence shape retention of the cured froth foam. Suitable examples of linear glycols include, monoethylene glycol, monopropylene glycol, diethylene glycol, and dipropylene glycol. Most preferred is monoethylene glycol.

Since the two chain extenders influence the properties of the cured froth foam in different ways it will be appreciated that the properties of the final foam will be influenced by (a) the relative proportions of the two, and (b) the absolute proportions of each in the polyurethane foam forming formulation.

Considering first the relative proportions of the two chain extenders, it can be said that in general the higher the proportion of the linear glycol relative to the alkoxylated bisphenol A the better the shape retention and the worse the thermoformability of the cured foam. Hence for most applications there is a compromise between having good shape retention and having a cured foam which is thermoformable at a temperature below which thermal degradation of the foam occurs.

As regards the absolute levels of the two chain extenders, the more second chain extender there is present, the more shape retentive the final product will be whilst the more first chain extender there is present the easier it will be to thermoform the product. Preferably, each chain extender is present in amounts corresponding to less than 20% by weight of the polyfunctional alcohol used.

As mentioned earlier, it is desirable that the cured polyurethane foam should be thermoformable at a temperature below which thermal degradation occurs. In practice this means that the polyurethane foam should be thermoformable at a temperature of less than 200 °C, preferably in the range 130-180 °C.

The polyfunctional isocyanates which can be used in the present process will be known to those skilled in the art. Suitable examples include individual or mixtures of the isomers of aromatic diisocyanates such as toluene diisocyanate (TDI), and xylene diisocyanates, difunctional aliphatic or cycloaliphatic isocyanates having between 2 and 18 carbon atoms, preferably 4-12 carbon atoms and isomers and oligomers of di(4-isocyanatophenyl) methane (MDI). Preferably the polyfunctional isocyanate is MDI, an MDI prepolymer, an MDI variant, or a mixture thereof. In addition to the above, prepolymers of polyfunctional isocyanates and polyfunctional alcohols or amines can be used.

Although the polyfunctional polyol used can be any alcohol having two or more reactive hydroxyl groups it is suitably a polyether polyol. The term polyether polyol, which is well known in the art, includes alkylene oxide adducts of (1) low molecular weight diols and triols or naturally occurring polyols (2) non reducing sugars and derivatives thereof and (3) phosphoric, phosphorous, and polyphosphoric acids. Examples of such adducts are the alkylene oxide adducts of ethylene glycol, propylene glycol, glycerol, trimethylol propane, the isomeric butanediols, and hexanediols, octanediols. Alkylene oxide adducts of pentaerythritol, sorbitol, arabitol, mannitol, alkyl glucoside, alkylene glycol glucosides and glycerol glucosides are also contemplated, as are adducts of alkylene diamines and hydrazines.

In general it is desirable that the alkylene oxide used to form the adduct is a lower alkylene oxide having from 2 to 4 carbon atoms. Preferred examples are ethylene oxide, propylene oxide, the butylene oxides or mixtures thereof.

Polyether polyols containing additional polymeric matter, e.g. polymer polyols, may also be employed. Mixtures of polyether polyols or mixtures of polyether polyols and polymer polyols can be used.

When both chain extenders are used for balanced thermoformability and shape retention, a mixture of polyfunctional alcohols and polymer polyols is tailored to obtain the desired mechanical properties of the final froth foam. When emphasis is placed upon easy thermoformability, e.g. for vacuum forming applications, the first chain extender is used as above together with small amounts of ethylene glycol and the

polyfunctional alcohols are preferably diols together with higher functionality polyfunctional alcohols and/or polymer polyols used in smaller amounts as required to obtain the correct mechanical properties.

In addition to the components described above, the polyurethane froth foam formulation may also contain other additives (e.g. surfactants, catalysts, fillers, etc.) which are routinely used in making froth foams.

The polyurethane forming formulations of the present invention can be frothed using standard techniques, coated on to an appropriate covering substrate and thereafter cured. It has been found that polyurethane froth foam backed coverings containing the additives described above, and in particular those produced according to the present invention, show particularly good shape retention/thermoformability properties without the weight and processing disadvantages of prior art materials. This is particularly so when the thickness of the polyurethane froth foam is less than 0.5 cm.

The invention is now illustrated by the following Example.

Example 1

A polyurethane froth formulation was prepared according to the composition given in Table 1. Dionol 220 (ex Akzo Chemie) was used as the alkoxylated bisphenol A.

The formulation was frothed with air in a Mondomix Mixer 'T-Model' and knife coated on to release paper. The froth coating was then cured in an oven at 150° for 5 minutes to form a frothed elastomer sheet of 0.35 cm thickness. The thermoformability and shape retention at ambient and 80°C was measured. The results of the thermoformability and shape retention tests are also given in Table 1.

Dionol 220 = 1 mole of bisphenol A ethoxylated with 4 mole of ethylene oxide.

| | |
|---|---|
| Polyurax polyol PPG 2025 - | 2000 MW polypropylene glycol (ex BP Chemicals). |
| Polyurax polyol U2022 - | Polymer polyol ca 20% by weight 50/50 styrene acrylonitrile copolymer in 5000 MW polyether polyol CP-3 (ex BP Chemicals). |
| Polyurax RA 4006 - | Quaternised fatty amine salt (ex BP Chemicals). |

**TABLE 1**

| | EXAMPLE |
|---|---|
| Formulation (parts per hundred parts of polyol blend) | 1 |
| Polyurax Polyol PPG 2025 | 67 |
| Polyurax Polyol U 2202 | 15 |
| Monoethylene Glycol | 7 |
| Dionol 220 (ex Akzo Chemie) | 10 |
| Polyurax Additive RA 4006 | 1 |
| Polyurax Silicone Surfactant SF114 | 1 |
| Polyurax Catalyst CF115 | 1 |
| Barium Sulphate | 300 |
| Polyurax Isocyanate IS-5 | 63 |
| Froth Cup Density (g/l) | 1400 |
| Cured Froth (g/l) | 920 |
| Thermoformability (150°C/5 mins) | |
| Open U-shaped | 10/10 |
| Closed U-shaped | 8/10 |
| Shape Retention | |
| Open U-shaped (ambient) | 6/10 |
| Closed U-shaped (ambient) | 8/10 |
| Open U-shaped (80°C) | 3/10 |
| Closed U-shaped (80°C) | 6/10 |

The terms "Modomix", "Polyurax", and "Dionol" are registered Trade Marks.

The shape retention and thermoformability tests have been described recently in the SPI-FSK proceedings (Aachen) "Polyurethane World Congress" - Oct 1987 - paper by P. Berthevas, A. Fanget and G. Catouillat. However tests to demonstrate such problems can easily be developed by those skilled in the art.

## Claims

1. A process for the manufacture of a thermoformable polyurethane froth foam which process comprises contacting a polyurethane forming formulation with an inert gas under conditions which produce a froth of the polyurethane forming formulation characterised in that the polyurethane forming formulation comprises a polyfunctional isocyanate, a polyfunctional alcohol and a chain extender which is an alkoxylated bisphenol A.

2. A process as claimed in Claim 1, characterised in that the alkoxylated bisphenol A is one alkoxylated with between 1 and 6 moles of ethylene oxide, propylene oxide, or mixtures thereof per mole of bisphenol A.

3. A process as claimed in Claim 1 or Claim 2, characterised in that the polyurethane forming formulation further comprises, as a second chain extender, a linear glycol.

4. A process as claimed in Claim 3, characterised in that the linear glycol is selected from the group consisting of monoethylene glycol, monopropylene glycol, diethylene glycol and dipropylene glycol.

5. A process as claimed in any preceding claim, characterised in that the alkoxylated bisphenol A chain extender comprises up to 20% by weight of the total polyfunctional alcohol used.

6. A process as claimed in Claim 3, characterised in that the second chain extender comprises up to 20% by weight of the total polyfunctional alcohol used.

7. A process as claimed in any preceding claim, characterised in that the polyfunctional alcohol is a diol.

8. A mixture consisting essentially of (a) up to 20% by weight of a chain extender as defined in Claim 1, (b) up to 20% of a second chain extender as defined in Claim 3 and (c) one or more polyfunctional alcohols.

9. A polyurethane froth foam backed covering comprising a covering substrate bonded to a layer of cured polyurethane froth foam produced by a process as claimed in any one of Claims 1 to 7.

10. A polyurethane froth foam backed covering comprising a covering substrate bonded to a layer of cured polyurethane froth foam containing in reacted form up to 20% by weight of a chain extender as defined in Claim 1.

11. A polyurethane froth foam backed covering comprising a covering substrate bonded to a layer of cured polyurethane froth foam containing in reacted form up to 20% by weight of the chain extender as defined in Claim 3.

12. A polyurethane froth foam backed covering as claimed in any of Claims 9 to 11, characterised in that the layer of cured polyurethane froth foam is less than 0.5 cm thick.

13. A process for preparing a polyurethane froth foam backed covering which comprises coating a covering substrate with a layer of froth of a polyurethane forming formulation as defined in any one of Claims 1 to 7 and thereafter curing the froth.

## Patentansprüche

1. Verfahren zur Herstellung eines Wärme-verformbaren, geschäumten Polyurethan-Schaums, das das Inkontaktbringen einer Polyurethan-bildenden Formulierung mit einem inerten Gas unter einen Schaum der Polyurethan-bildenden Formulierung herstellenden Bedingungen beinhaltet, dadurch gekennzeichnet, daß die Polyurethan-bildende Formulierung ein polyfunktionelles Isocyanat, einen mehrwertigen Alkohol und einen Kettenverlängerer umfaßt, der ein alkoxyliertes Bisphenol A ist.

2. Verfahren nach Anspruch 1, dadurch gekennzeichnet, daß das alkoxylierte Bisphenol A ein Bisphenol A ist, das mit 1-6 Mol Ethylenoxid, Propylenoxid oder Gemischen davon pro Mol Bisphenol A alkoxyliert

ist.

3. Verfahren nach Anspruch 1 oder Anspruch 2, dadurch gekennzeichnet, daß die Polyurethan-bildende Formulierung weiter ein lineares Glycol als einen zweiten Kettenverlängerer enthält.

4. Verfahren nach Anspruch 3, dadurch gekennzeichnet, daß das lineare Glycol ausgewählt ist aus der Gruppe bestehend aus Monoethylenglycol, Monopropylenglycol, Diethylenglycol und Dipropylenglycol.

5. Verfahren nach einem der vorhergehenden Ansprüche, dadurch gekennzeichnet, daß der alkoxylierte Bisphenol A Kettenverlängerer bis zu 20 Gew.-% des gesamten, verwendeten mehrwertigen Alkohols umfaßt.

6. Verfahren nach Anspruch 3, dadurch gekennzeichnet, daß der zweite Kettenverlängerer bis zu 20 Gew.-% des gesamten, verwendeten mehrwertigen Alkohols umfaßt.

7. Verfahren nach einem der vorhergehenden Ansprüche, dadurch gekennzeichnet, daß der mehrwertige Alkohol ein Diol ist.

8. Gemisch, das im wesentlichen aus (a) bis zu 20 Gew.-% eines Kettenverlängerers nach Anspruch 1, (b) bis zu 20 Gew.-% eines zweiten Kettenverlängerers nach Anspruch 3 und (c) einem oder mehreren mehrwertigen Alkoholen besteht.

9. Mit einem geschäumten Polyurethan-Schaum verstärkte Bedeckung, welche ein Bedeckungssubstrat umfaßt, das an eine Schicht des nach einen der Ansprüche 1 bis 7 hergestellten, gehärteten Polyurethan-Schaums gebunden ist.

10. Mit einem geschäumten Polyurethan-Schaum verstärkte Bedeckung, welche ein Bedeckungssubstrat umfaßt, das an eine Schicht von gehärtetem, geschäumtem Polyurethan-Schaum gebunden ist, der bis zu 20 Gew.-% eines Kettenverlängerers nach Anspruch 1 in umgesetzter Form enthält.

11. Mit einem geschäumten Polyurethan-Schaum verstärkte Bedeckung, die ein Bedeckungssubstrat umfaßt, das an eine Schicht von gehärtetem, geschäumtem Polyurethan-Schaum gebunden ist, der bis zu 20 Gew.-% eines Kettenverlängerers nach Anspruch 3 in umgesetzter Form enthält.

12. Mit einem geschäumten Polyurethan-Schaum verstärkte Bedeckung nach einen der Ansprüche 9 bis 11, dadurch gekennzeichnet, daß die Schicht des gehärteten Polyurethan-Schaums dünner als 0,5 cm ist.

13. Verfahren zur Herstellung einer mit einem geschäumten Polyurethan-Schaum verstärkten Bedeckung, welches das Beschichten eines Bedeckungssubstrates mit einer Schicht eines Schaums einer Polyurethan-bildenden Formulierung nach einem der Ansprüche 1 bis 7 und anschließend Härten des Schaums umfaßt.

**Revendications**

1. Un procédé de fabrication d'une mousse a prémoussage en polyuréthanne, thermoformable, qui comprend la mise en contact d'une composition de formation de polyuréthanne, avec un gaz inerte, dans des conditions qui produisent une mousse fluide (prémousse) de la composition de formation du polyuréthanne, caractérisé en ce que la composition de formation de polyuréthanne comprend un isocyanate polyfonctionnel, un alcool polyfonctionnel et un agent d'allongement de chaîne qui est un bisphénol A alcoxylé.

2. Un procédé selon la revendication 1, caractérisé en ce que le bisphénol A alcoxylé est un bisphénol A alcoxylé avec 1 à 6 moles d'oxyde d'éthylène, d'oxyde de propylène ou d'un mélange de ces oxydes par mole par bisphénol A.

3. Un procédé selon la revendication 1 ou 2, caractérisé en ce que la composition de formation de polyuréthanne comprend en outre, comme second agent d'allongement de chaîne, un glycol linéaire.

4. Un procédé selon la revendication 3, caractérisé en ce que le glycol linéaire est choisi parmi le monoéthylèneglycol, le monopropylèneglycol, le diéthylèneglycol et le dipropylèneglycol.

5. Un procédé selon l'une quelconque des revendications précédentes, caractérisé en ce que le bisphénol A alcoxylé, agent d'allongement de chaîne, représente jusqu'à 20% en poids de la totalité de l'alcool polyfonctionnel utilisé.

6. Un procédé selon la revendication 3, caractérisé en ce que le second agent d'allongement de chaîne représente jusqu'à 20% en poids de la totalité de l'alcool polyfonctionnel utilisé.

7. Un procédé selon l'une quelconque des revendications précédentes, caractérisé en ce que l'alcool polyfonctionnel est un diol.

8. Mélange constitué essentiellement de :
   (a) jusqu'à 20% en poids d'un agent d'allongement de chaîne, tel que défini dans la revendication 1,
   (b) jusqu'à 20% en poids d'un second agent d'allongement de chaîne, tel que défini dans la revendication 3, et
   (c) un ou plusieurs alcools polyfonctionnels.

9. Revêtement garni de mousse à prémoussage en polyuréthanne, comprenant un support de revêtement, lié à une couche de mousse à prémoussage en polyuréthanne durci, ladite mousse à prémoussage étant produite par le procédé revendiqué dans l'une quelconque des revendications 1 à 7.

10. Revêtement garni de mousse à prémoussage en polyuréthanne, comprenant un support de revêtement, lié à une couche de mousse à prémoussage en polyuréthanne durci, contenant, sous forme ayant réagi, jusqu'à 20% en poids d'un agent d'allongement de chaîne, tel que défini dans la revendication 1.

11. Revêtement garni de mousse à prémoussage en polyuréthanne, comprenant un support de revêtement, lié à une couche de mousse à prémoussage en polyuréthanne durci, contenant, sous forme ayant réagi, jusqu'à 20% en poids de l'agent d'allongement de chaîne, tel que défini dans la revendication 3.

12. Revêtement garni de mousse à prémoussage en polyuréthanne, selon l'une quelconque des revendications 1 à 11, caractérisé en ce que la couche de mousse à prémoussage en polyuréthanne durci présente une épaisseur inférieure à 0,5 cm.

13. Procédé de préparation d'un revêtement garni de mousse à prémoussage en polyuréthanne, qui comprend le recouvrement d'un support de revêtement avec une couche de mousse fluide d'une composition de formation de polyuréthanne, tel que défini dans l'une quelconque des revendications 1 à 11, puis le durcissement de la mousse fluide.